# EUROPÄISCHE PATENTSCHRIFT

(11) **EP 2 089 957 B1**
(45) Veröffentlichungstag und Bekanntmachung des Hinweises auf die Patenterteilung: **15.08.2012**
(21) Anmeldenummer: 07822198.3
(22) Anmeldetag: 05.11.2007
(51) Int. Cl.: H02K 33/16, H02K 41/02, H02K 41/03, H01F 7/17, F16K 31/04

(54) **DREH-HUB-MOTOR UND BESTÜCKKOPF**
RECIPROCATING ROTARY MOTOR AND PLACEMENT HEAD
MOTEUR DE ROTATION-LEVAGE ET TÊTE D'ÉQUIPEMENT

(30) Priorität: 07.11.2006 DE 102006052457
(43) Veröffentlichungstag der Anmeldung: 19.08.2009
(73) Patentinhaber: ASM Assembly Systems GmbH & Co. KG, 81379 München (DE)
(72) Erfinder: BURGER, Stefan, 81379 München (DE)
(74) Vertreter: Patentanwälte Bals & Vogel
(86) Internationale Anmeldenummer: PCT/EP2007/061869
(87) Internationale Veröffentlichungsnummer: WO 2008/055866

(56) Entgegenhaltungen:
- EP-A- 1 566 879
- WO-A-96/02972
- DE-A1- 3 527 226
- DE-A1- 10 319 081
- US-A- 5 982 053

## Beschreibung

Die Erfindung betrifft einen Dreh-Hub-Motor für Bewegungen sowohl um eine Drehachse als auch in einer axialen Verschieberichtung, sowie einen Bestückkopf mit einem derartigen Dreh-Hub-Motor.

In der Technik gibt es eine Vielzahl von Anwendungen, für die Elektromotoren zur Realisierung translatorischer oder rotatorischer Bewegungen eingesetzt werden. In einigen Fällen, beispielsweise für Positionierungsaufgaben, ist es auch notwendig, beide Bewegungen gleichzeitig zur Verfügung zu stellen. Dazu werden oft separate Antriebe für die Dreh- und die Verfahrbewegung verwendet, oder die Achsen werden mit einem gemeinsamen Antrieb über Zwischengetriebe betrieben. Beide Möglichkeiten sind jedoch aufwändig, teuer zu realisieren und darüber hinaus hinsichtlich ihrer Bauweise nicht kompakt. Ein vorteilhaftes Anwendungsgebiet derartiger Dreh-Hub-Motoren ist beispielsweise die Bestücktechnik.

Aus der Patentschrift EP 0482321 A1 ist ein Antrieb bekannt, welcher einen Linearabschnitt und einen Rotationsabschnitt in einem gemeinsamen Gehäuse aufweist, wobei der Linearabschnitt einen Linear-Schrittmotor, und der Rotationsabschnitt einen Rotations-Schrittmotor beinhaltet. Weiterhin weist der Antrieb eine gemeinsame Welle für die beiden Schrittmotoren auf, die von dem Linear-Schrittmotor in eine axiale Bewegung und von dem Rotations-Schrittmotor in eine Drehbewegung versetzt werden kann. Die konstruktive Ausgestaltung dieses kombinierten Antriebs ist jedoch aufwändig in der Herstellung und damit in der Realisierung entsprechend teuer. Weiterhin erfordert ein derart gestalteter Antrieb aufgrund der Anordnung der einzelnen Antriebskomponenten einen vergleichsweise großen Bauraum.

Aus der EP 1 566 879 A1 ist ein Drehhubmotor bekannt, mit einem Primärteil, welches mindestens ein mehrphasiges Spulenpaket in Form eines zylinderförmigen Hohlkörpers aufweist und einen Sekundärteil mit einem Permanentmagneten, der zumindest abschnittsweise innerhalb des zylinderförmigen Hohlkörpers des Spulenpakets angeordnet ist, relativ zum Primärteil um eine Drehachse drehbar und in eine verschieberichtung um eine Hubstrecke verschiebbar gelagert ist und wobei die Permanentmagnete quer zur Drehachse magnetisiert sind, eine mit dem Primärteil gekoppelten Steuereinrichtung durch die ein Strom durch ein Spulenpaket bezüglich Amplitude und Phasenrichtung derart steuerbar ist, dass das durch den Strom verursachte Magnetfeld des Primärteils mit dem Magnetfeld der Permanentmagnete so wechselwirkt, dass eine Verschiebung als auch eine Rotation des Sekundärteils eintritt.

Die zu lösende Aufgabe der vorliegenden Erfindung besteht darin, einen Antrieb und einen Bestückkopf bereitzustellen, welche sich durch eine kompakte Bauweise auszeichnen.

Diese Aufgabe wird durch den Dreh-Hub-Motor sowie den Bestückkopf gemäß dem unabhängigen Anspruch 1 gelöst. Vorteilhafte Ausgestaltungen sind Gegenstand der abhängigen Ansprüche.

Ein Dreh-Hub-Motor gemäß Anspruch 1 umfasst ein Primärteil mit mindestens einem mehrphasigen Spulenpaket in der Form eines zylindrischen Hohlkörpers, ein Sekundärteil mit einem Permanentmagneten, welcher zumindest abschnittsweise innerhalb des zylindrischen Hohlkörpers des zumindest einen Spulenpakets angeordnet ist, relativ zum Primärteil um eine Drehachse drehbar und in einer Verschieberichtung um eine Hubstrecke Δz verschiebbar gelagert ist und quer zur Drehachse magnetisiert ist. Weiterhin weist der Dreh-Hub-Motor eine mit dem Primärteil gekoppelte Steuereinrichtung auf, mittels der der Strom durch das Spulenpaket hinsichtlich Amplitude und Phasenrichtung derart steuerbar ist, dass das durch den Strom verursachte Magnetfeld des Primärteils mit dem Magnetfeld des Permanentmagneten wechselwirkt und sowohl eine Verschiebung als auch eine Rotation des Sekundärteils relativ zum Primärteil bewirkt..

Mittels dieser konstruktiven Gestaltung ist es möglich, den Antrieb sehr einfach und kostengünstig herzustellen bzw. zu montieren. Da sowohl für die Drehbewegung als auch für die Hubbewegung nur ein gemeinsamer Antrieb benötigt wird, können die Komplexität des Gesamtsystems, aber auch das Gewicht des Antriebsmoduls deutlich reduziert werden. Steht beim Einsatz eines derartigen Dreh-Hub-Motors das Gewicht im Vordergrund, beispielsweise um in Fällen, in denen das Dreh-Hub-Motor-Modul selbst verfahren wird, die beschleunigte Masse zu reduzieren, so kann die Steuereinrichtung auch außerhalb des Dreh-Hub-Motor-Moduls platziert werden. Weiterhin kann durch dieses Antriebskonzept das Dreh-Hub-Motor-Modul sehr kompakt gehalten werden, was den Einsatz in einer räumlich begrenzten Arbeitsumgebung erleichtert bzw. überhaupt erst ermöglicht.

Das Spulenpaket weist eine Schrägwicklung auf, deren Windungen schräg zu den Mantellinien des zylinderförmigen Hohlkörpers verlaufen.

Als Mantellinien werden dabei die Linien bezeichnet, die auf dem Mantel eines Rotationskörpers, z.B. eines Zylinders, parallel zu seiner Rotationsachse verlaufen. Die Schrägwicklung weist sowohl Windungsanteile in Längsrichtung (parallel zur Drehachse) als auch senkrecht dazu in Umfangsrichtung auf und ist derart gestaltet, dass die Steigung ∂z/∂U über die einzelnen Windungsgänge entlang des Umfangs U des zylinderförmigen Hohlkörpers erfolgt. Diese Wicklungsgeometrie erlaubt einerseits eine sehr kompakte Bauweise, andererseits ist durch den schrägen Verlauf der Windungen relativ zur Drehachse eine hohe Axialkraft zwischen Primärteil und Sekundärteil in Richtung der Drehachse erzielbar.

Das Spulenpaket weist alternativ eine Wicklung mit rautenförmigen Windungen auf.

Dazu wird der den zylinderförmigen Hohlkörper bildende Leiter rautenförmig Windung neben Windung liegend annähernd um einen Leiterdurchmesser versetzt gewickelt, zu einem Zylinder gebogen und zu einer Einheit verbunden. Diese Wicklungsart ist auch als Rautenwicklung oder Rhombuswicklung bekannt. Auch diese Wicklungsgeometrie ermöglicht durch den schrägen Verlauf der Windungen relativ zur Drehachse eine hohe Axialkraft bei vergleichsweise kompakter Bauweise.

Die Verschiebung des Sekundärteils relativ zum Primärteil ist über die Hubstrecke Δz in ihren beiden Endstellungen durch Anschläge derart begrenzt, dass der Permanentmagnet bei einer Verschiebung zwischen den beiden Endstellungen in jeder Position zumindest eines der Spulenpakete nur teilweise überlappt.

Falls der Permanentmagnet über seine gesamte Länge gleichzeitig mit allen Spulen vollständig überlappen würde, würden sich die Axialkräfte vollständig aufheben, so dass keine Kraft in axialer Richtung mehr erzeugt werden könnte. Um dies zu gewährleisten, begrenzen Anschläge die Hubstrecke des Permanentmagneten.

Der Dreh-Hub-Motor weist eine Rückschlusseinrichtung auf, welche in Verschieberichtung mindestens zwei Abschnitte (A, B) mit unterschiedlichem magnetischem Widerstand bzw. magnetischem Fluss aufweist und derart mit dem Permanentmagneten zusammenwirkt, dass sich ein magnetischer Rückschluss bildet. Dabei ist die Rückschlusseinrichtung derart ausgebildet, dass der Permanentmagnet beim Verschieben über die Hubstrecke Δz mit zumindest zwei Abschnitten (A, B) der Rückschlusseinrichtung gleichzeitig überlappt.

Aufgrund der Überlappung des Permanentmagneten mit den Abschnitten wirkt auf den Permanentmagneten eine definierte Kraft, welche parallel zur Drehachse gerichtet ist und ihn in eine Vorzugslage entlang der Hubstrecke drängt. Der Permanentmagnet ist nämlich immer bestrebt, entlang der Hubstrecke eine Vorzugslage relativ zum Rückschlusselement einzunehmen, in der der magnetische Widerstand minimal bzw. der magnetische Fluss maximal ist. Wird der Permanentmagnet zwangsweise aus dieser Lage wegbewegt, so bewegt er sich im freien Zustand selbsttätig zurück in diese Vorzugslage. Je nach Ausbildung der Rückschlusseinrichtung wirkt dabei auf den Permanentmagneten eine definierte Kraft, welche ihn in die Vorzugslage drängt. Diese Kraft ist auf einen mit dem Dreh-Hub-Motor gekoppelten Körper übertragbar. Die Krafterzeugung ist berührungslos, verschleißfrei, langzeitstabil und hysteresefrei. Eine Hilfsenergie, wie sie beispielsweise bei Pneumatikzylindern notwendig ist, ist nicht erforderlich. Durch eine entsprechende Ausgestaltung der Abschnitte können beliebige Kraftkennlinien dargestellt werden.

In einer Ausgestaltung des Dreh-Hub-Motors nach Anspruch 2 weisen die Abschnitte (A, B) Materialien mit unterschiedlichem magnetischem Widerstand auf.

Beispielsweise kann einer der Abschnitte Edelstahl und der andere Abschnitt Weicheisen aufweisen. Dabei weist Edelstahl einen erheblich größeren magnetischen Widerstand bzw. einen geringeren magnetischen Fluss auf als Weicheisen, sodass sich der Permanentmagnet im freien Zustand immer in Richtung des aus Weicheisen gefertigten Abschnitts bewegen würde.

In einer weiteren Ausgestaltung des Dreh-Hub-Motors nach Anspruch 3 weist der Dreh-Hub-Motor Abschnitte auf, welche von dem Permanentmagneten unterschiedlich weit beabstandet sind.

Durch die unterschiedlichen Abstände der Abschnitte von dem Permanentmagneten sind die Luftspalte zwischen dem Permanentmagnet und den Abschnitten der Rückschlusseinrichtung unterschiedlich weit, so dass sich bereits dadurch die unterschiedlichen magnetischen Widerstände ergeben. Zusätzlich dazu können bei dieser Ausgestaltung die Abschnitte aus dem gleichen oder aus unterschiedlichen Materialien hergestellt sein.

In den Ausgestaltungen gemäß der Ansprüche 4 und 5 können die Abschnitte derart ausgebildet sein, dass auf den Permanentmagneten bei Verschieben über die Hubstrecke Δz entweder eine konstante oder eine über die Hubstrecke Δz variable Kraft wirkt, welche parallel zur Verschieberichtung gerichtet ist.

Anhand dieser Ausgestaltungen wird deutlich, dass die von der Vorrichtung auf einen mit ihr gekoppelten Körper wirkende Kraft je nach den Erfordernissen der jeweiligen Anwendung individuell darstellbar ist. Damit ist die Rückstellkraft eindeutig vorhersagbar, was die Regelungsgenauigkeit und das dynamische Verhalten sowohl bei einer Kraft- als auch bei einer Positionsregelung deutlich erhöht. Dies ist beispielsweise von Vorteil, um beim Bestücken von Leiterplatten mit elektrischen Bauelementen die Aufsetzkraft der Pipette auf das Substrat möglichst präzise einstellen zu können.

Gemäß einer Ausgestaltung des Dreh-Hub-Motors nach Anspruch 6 besteht die Rückschlusseinrichtung aus zwei zylinderförmigen Hülsen, welche lösbar miteinander verbindbar sind und jeweils einen der Abschnitte (A, B) des Rückschlusses aufweisen.

Im einfachsten Fall wird der Innendurchmesser der ersten Hülse mit dem Außendurchmesser der zweiten Hülse auf Passung gearbeitet, so dass die beiden Hülsen von Hand ineinander gesteckt werden können. Die Fixierung kann durch Reibschluss erfolgen, prinzipiell sind hierfür jedoch auch andere Verbindungselemente, beispielsweise Schrauben oder Stifte, einsetzbar. Hierdurch können sowohl die Montage des Antriebsmoduls als auch Wartungsarbeiten deutlich vereinfacht werden.

In einer Ausgestaltung des Dreh-Hub-Motors nach Anspruch 7 weist das Primärteil mehrere Spulenpakete auf, welche in Verschieberichtung nebeneinander angeordnet sind.

Das Sekundärteil wird dabei so eingebaut, dass es zwischen den Spulenpaketen hin und her laufen kann. Hierdurch lässt sich sowohl die Axialkraft als auch der maximale Hub erhöhen.

Gemäß Anspruch 8 wird ein Bestückkopf zum Bestücken von Substraten mit elektrischen Bauelementen beansprucht. Dieser weist eine Halteeinrichtung zur Aufnahme der elektrischen Bauelemente, sowie einen Dreh-Hub-Motor auf, wobei das Primärteil fest mit einem Gehäuseteil des Bestückkopfs verbunden ist und das Sekundärteil mit der Halteeinrichtung gekoppelt ist.

Derartige Bestückköpfe werden als Matrixköpfe oder auch als Revolverköpfe zum Bestücken von Substraten, beispielsweise Leiterplatten, mit elektrischen Bauelementen in Bestückautomaten eingesetzt. Bei diesem Einsatzgebiet stehen Positionierungsaufgaben hinsichtlich Raum- und Winkellage im Vordergrund. Aufgrund des geringen Gewichts und der kompakten Bauweise des Dreh-Hub-Motors können auch mehrere Antriebsmodule mit entsprechenden Halteeinrichtungen nebeneinander an einem Bestückkopf angeordnet werden, was eine deutliche Steigerung der Bestückleistung des Bestückautomaten zur Folge hat. Es ist jedoch ebenso möglich, den Bestückkopf mit einem reinen Hubantrieb gemäß den obigen Ausführungen und zusätzlich einem separaten Drehantrieb auszustatten.

In einer weiteren Ausgestaltung des Antriebs ist der Permanentmagnet zylinderförmig ausgebildet, und der Rückschluss weist die Form eines Hohlzylinders auf, welcher den Permanentmagneten radial umschließt.

Bei dieser Ausgestaltung kann der Permanentmagnet innerhalb der Rückschlusseinrichtung gleichzeitig in Verschieberichtung bewegt und um seine Längsachse rotiert werden. Dies ist dann von Vorteil, wenn der mit der Vorrichtung gekoppelte Körper nicht nur linear verschiebbar sondern auch rotierbar gelagert ist.

In einer Ausgestaltung des Antriebs ist das Sekundärteil als Rotor ausgebildet und relativ zum Primärteil um eine zur Verschieberichtung parallele Drehachse drehbar gelagert. Dabei ist das mindestens eine Spulenpaket des Primärteils mehrphasig ausgestaltet. Der Hubantrieb weist eine mit dem mindestens einen Spulenpaket gekoppelte Steuereinrichtung auf, mittels der der Strom durch das Spulenpaket hinsichtlich Stromamplitude und Stromrichtungsvektor (Phase) derart steuerbar ist, dass das durch den Strom verursachte Magnetfeld des Primärteils mit dem Magnetfeld des Permanentmagneten des Sekundärteils wechselwirkt und sowohl eine Verschiebung als auch eine Rotation des Rotors bewirkt.

Die Realisierung sowohl einer Verschiebung in axialer Richtung parallel zur Drehachse als auch einer Rotation des Rotors um diese Drehachse ist insbesondere dann von Vorteil, wenn neben einer Drehbewegung auch eine Zustellbewegung, beispielsweise für Positionierungsaufgaben, erforderlich ist. In diesen Fällen kann auf eine Antriebs- oder Getriebeeinheit verzichtet werden, das Antriebsmodul kann kleiner, kompakter und leichter gestaltet werden.

Im Folgenden werden Ausführungsbeispiele des Dreh-Hub-Motors und des Bestückkopfs mit Bezug auf die beigefügten Figuren näher erläutert. In den Figuren sind:
- FIG 1: eine schematische Ansicht eines Bestückautomaten,
- FIG 2A und 2B: schematische Darstellungen eines Bestückkopfes,
- FIG 3A und 3B: schematische Darstellungen einer ersten Ausgestaltung der Rückstelleinrichtung,
- FIG 4A und 4B: schematische Darstellungen einer zweiten Ausgestaltung der Rückstelleinrichtung,
- FIG 5A bis 5C: schematische Darstellungen einer dritten Ausgestaltung der Rückstelleinrichtung,
- FIG 6A und 6B: schematische Querschnittsansichten der Rückstelleinrichtung,
- FIG 7: eine schematische Darstellung einer vierten Ausgestaltung der Rückschlusseinrichtung.
- FIG 8A und 8B: ein schematisches Wirkprinzip des Dreh-Hub-Motors
- FIG 9A und 9B: schematische Darstellungen einer Schrägwicklung
- FIG 10A bis 10C: schematische Darstellungen einer Rhombuswicklung

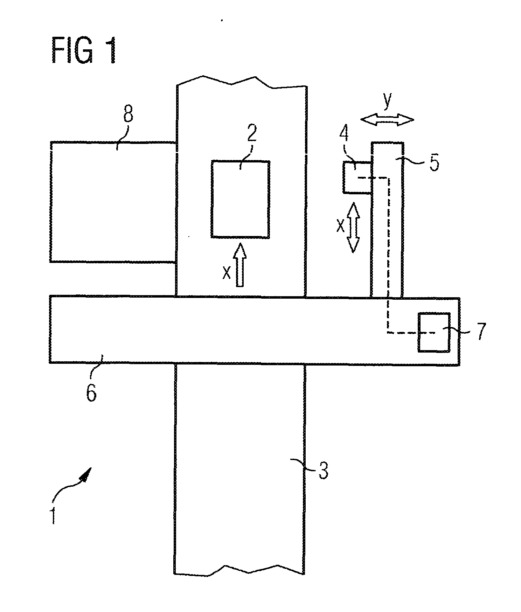

In FIG 1 ist ein Bestückautomat 1 zum Bestücken von Substraten mit elektrischen Bauteilen 11 schematisch dargestellt. Zu bestückende Substrate 2 werden über eine Transportstrecke 3, beispielsweise ein Transportband, zu einem Bestückplatz transportiert, dort mit elektrischen Bauteilen 11 bestückt und anschließend abtransportiert. Der Bestückvorgang wird durch einen Bestückkopf 4 durchgeführt. Der Bestückkopf 4 ist in einer zur Transportrichtung (Pfeil x) der Substrate 2 parallelen Richtung (Pfeil x) verschiebbar an einem Positionierarm 5 angebracht. Der Positionierarm 5 wiederum ist quer zur Transportrichtung (Pfeil y) verschiebbar an einem Träger 6 angebracht, welcher die Transportstrecke 3 brückenartig überspannt. Der Bestückautomat 1 umfasst ferner eine Steuereinrichtung 7, welche mit dem Positionierarm 5 und dem Bestückkopf 4 gekoppelt ist und die Bewegungsabläufe steuert. Seitlich der Transportstrecke 3 ist in einem Zuführbereich eine Zuführeinrichtung 8 vorgesehen, welche die elektrischen Bauteile für den Bestückkopf 4 bereitstellen. Vor dem Bestücken wird der Bestückkopf 4 mittels des Positionierarmes 5 zu der Zuführeinrichtung 8 gefahren, wo er Bauteile 11 aufnimmt, und wird anschließend über das Substrat 2 verfahren, wo er die Bauteile 11 auf dem Substrat 2 absetzt.

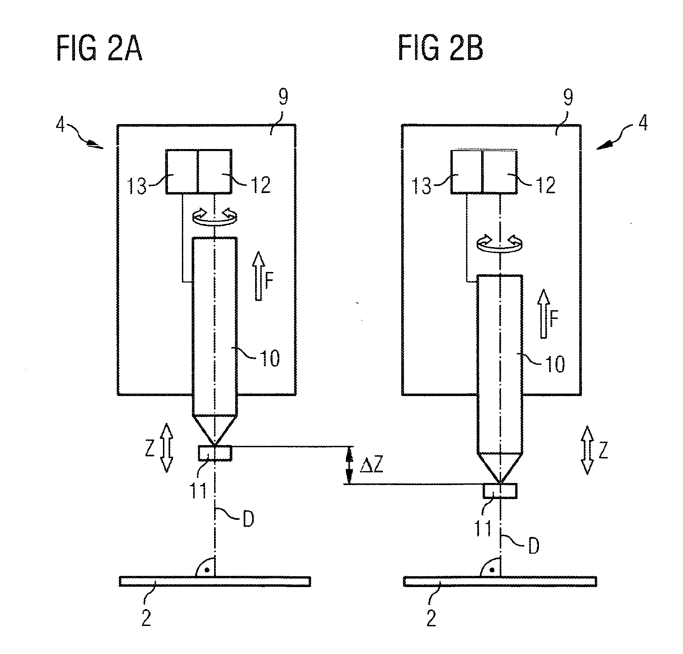

In den Figuren 2A und 2B ist der Bestückkopf 4 schematisch dargestellt. Der Bestückkopf 4 umfasst ein Gehäuse 9 sowie eine Halteeinrichtung 10 zum Halten der Bauteile 11, welche um eine Hubstrecke Δz in einer Verschieberichtung (Pfeil z) senkrecht zur Substratoberfläche verschiebbar am Gehäuse 9 gelagert ist. Dabei kann die Halteeinrichtung 10 zwischen einer Ruheposition (in FIG 2A dargestellt) und einer Arbeitsposition (in FIG 2B dargestellt) hin und her bewegt werden. Die Ruheposition und die Arbeitsposition sind in Verschieberichtung um eine Hubstrecke Δz beabstandet.

Der Bestückkopf 4 umfasst ferner eine Rückstelleinrichtung 12, welche derart mit dem Gehäuse 9 und der Halteeinrichtung 10 gekoppelt ist, dass die Rückstelleinrichtung 12 auf die Halteeinrichtung 10 über die Hubstrecke eine Rückstellkraft F ausübt, welche parallel zur Verschieberichtung gerichtet ist und die Halteeinrichtung 10 in die Ruheposition (FIG 2A) drängt. Auf den genauen Aufbau der Rückstelleinrichtung 12 wird später noch eingegangen.

Ferner weist der Bestückkopf 4 einen Antrieb 13 auf, welcher als Hubantrieb ausgebildet sein kann und die Halteeinrichtung 10 von der Ruheposition in die Arbeitsposition bewegt. Dieser Antrieb 13 kann auch als integrierter Dreh-Hub-Motor ausgestaltet sein, der zusätzlich zur Hubbewegung die Halteeinrichtung 10 auch um eine Drehachse D rotieren lässt. Dies dient dazu, ein an der Halteeinrichtung 10 gehaltenes Bauteil 11 in eine vorgeschriebene Winkelposition zu bringen. Wie aus den Figuren 2A und 2B ferner hervorgeht, ist ein von der Halteeinrichtung 10 gehaltenes Bauteil 11 in der Ruheposition (FIG 2A) näher am Gehäuse 9 angeordnet, als in der Arbeitsposition (FIG 2B). Die Ruheposition wird daher insbesondere dann eingenommen, wenn der Bestückkopf 4 verfahren wird bzw. wenn die Halteeinrichtung 10 keinen Arbeitsvorgang wie beispielsweise das Bestücken oder das Abholen von Bauteilen 11 vornimmt. Dies dient zum Schutz der Halteeinrichtung 10 und des Bauelements 11.

Es ist möglich, den Bestückkopf 4 sowohl mit einer Rückstelleinrichtung 12 als auch mit einem Antrieb 13, welcher als kombinierter Dreh-Hub-Motor oder auch als reiner Hubantrieb ausgestaltet sein kann, auszustatten. Sowohl der Antrieb 13 als auch die Rückstelleinrichtung 12 können dabei jeweils als ein separates Modul konzipiert sein, oder auch in ein gemeinsames Modul integriert werden. Es ist jedoch auch möglich, den Dreh-Hub-Motor ohne die Rückstelleinrichtung 12 an einem Bestückkopf zu betreiben. Ist eine Drehbewegung nicht notwendig, so kann der Antrieb 13 auch als reiner Hubantrieb ausgebildet sein, wahlweise in Kombination mit der magnetischen Rückstellung 12, wobei dies wiederum in zwei separaten Modulen als auch in einem integrierten Modul erfolgen kann. Diese Alternativen werden in den nachfolgenden Figuren näher erläutert.

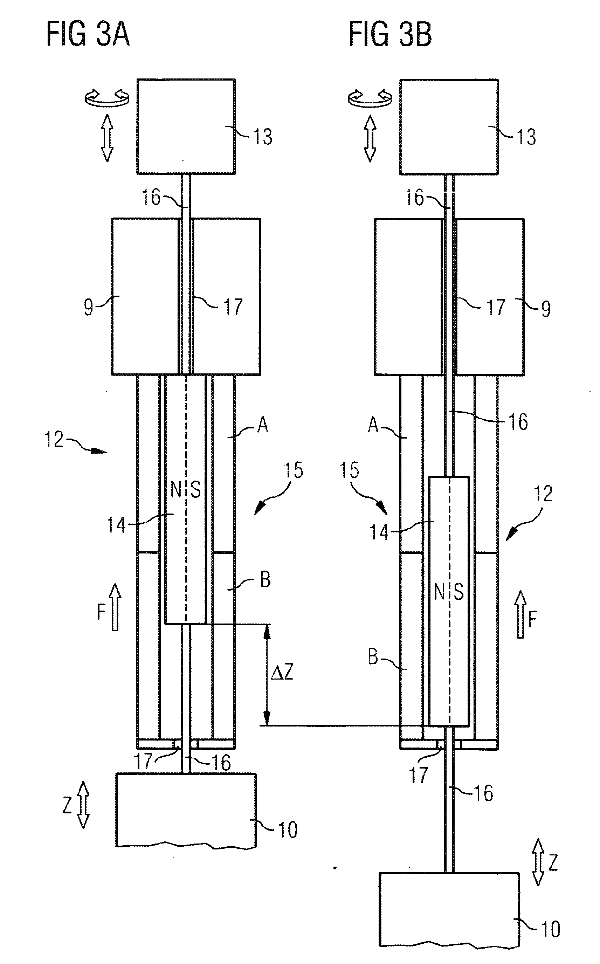

In den Figuren 3A und 3B ist eine erste Ausgestaltung der Erfindung, bei der der Antrieb 13 und die Rückstelleinrichtung 12 als separate Module ausgebildet sind, schematisch dargestellt. Die Rückstelleinrichtung 12 ist mit dem Gehäuse 9 und der Halteeinrichtung 10 gekoppelt. Dabei ist in FIG 3A die Halteeinrichtung 10 in der Ruheposition und in FIG 3B in der Arbeitsposition dargestellt. Die Rückstelleinrichtung 12 umfasst einen Permanentmagneten 14, sowie eine magnetische Rückschlusseinrichtung 15, welche mit dem Permanentmagneten 14 derart zusammenwirkt, dass sich ein magnetischer Rückschluss bildet. Der Permanentmagnet 14 ist relativ zur Rückschlusseinrichtung 15 in der Verschieberichtung (Pfeil z) um die gleiche Hubstrecke Δz, wie die Halteeinrichtung 10, verschiebbar. Der Permanentmagnet 14 weist ferner einen Nordpol (N) und einen Südpol (S) auf, welche quer zur Verschieberichtung (Pfeil z) orientiert sind. Die Rückschlusseinrichtung 15 weist in Verschieberichtung zumindest zwei Abschnitte A, B mit unterschiedlichem magnetischem Widerstand bzw. magnetischen Fluss auf. Die Abschnitte A, B sind derart ausgebildet bzw. angeordnet, dass der Permanentmagnet 14 beim Verschieben über die Hubstrecke Δz gleichzeitig zumindest zwei Abschnitte A, B der Rückschlusseinrichtung 15 überlappt.

Der Permanentmagnet 14 ist bestrebt, sich in Richtung desjenigen Abschnittes A, B mit dem geringeren magnetischen Widerstand bzw. dem höheren magnetischen Fluss zu bewegen. Dadurch, dass der Permanentmagnet 14 über die gesamte Hubstrecke Δz beide Abschnitte A, B überlappt, wirkt die Rückstellkraft F über die gesamte Hubstrecke Δz.

In der ersten Ausgestaltung gemäß den Figuren 3A und 3B sind die Rückschlusseinrichtung 15 fest mit dem Gehäuse 9 und der Permanentmagnet 14 fest mit der Halteeinrichtung 10 verbunden. Somit bewegt sich der Permanentmagnet 14 zusammen mit der Halteeinrichtung 10 in Verschieberichtung relativ zum Gehäuse 9 bzw. zur Rückschlusseinrichtung 15. Der Permanentmagnet 14 stellt daher in dieser Ausgestaltung den mobilen Teil der Rückstelleinrichtung 12 dar. Wie bezüglich der Figuren 2A und 2B schon erwähnt wurde, zeichnet sich die Ruheposition gegenüber der Arbeitsposition der Halteeinrichtung 10 dadurch aus, dass die Halteeinrichtung 10 in der Ruheposition weniger weit vom Gehäuse 9 wegragt bzw. sich ein von der Halteeinrichtung 10 gehaltenes Bauteil 11 näher am Gehäuse 9 befindet als in der Arbeitsposition. Aufgrund des oben beschriebenen physikalischen Effekts sind die Abschnitte A, B der Rückschlusseinrichtung 15 deshalb derart ausgebildet und angeordnet, dass der magnetische Widerstand des Abschnitts A kleiner ist als der magnetische Widerstand des Abschnitts B. Auf die mit dem Permanentmagneten 14 gekoppelte Halteeinrichtung 10 wirkt daher die Rückstellkraft F, welche die Halteeinrichtung 10 im freien Zustand in die Ruheposition drängt (in FIG 3A dargestellt). Dieser Zustand wird auch eingenommen, wenn der gesamte Bestückkopf 4 stromfrei geschaltet ist, so dass sich die Halteeinrichtung 10 auch in stromfreien bzw. antriebslosen Zustand des Bestückkopfes 4 in der Ruheposition befindet und dadurch vor Beschädigung gesichert ist. Ist mit der Halteeinrichtung 10 ein Arbeitsvorgang durchzuführen, so muss die Halteeinrichtung 10 mittels des Antriebs 13 gegen die Rückstellkraft F in die Arbeitsposition bewegt werden (in FIG 3B dargestellt).

Bei dem in den Figuren 3A und 3B dargestellten Ausführungsbeispiel ist der bewegliche Permanentmagnet 14 an seinen freien Enden mit Führungsstäben 16 ausgestattet, welche in entsprechende am Gehäuse 9 bzw. an einer Verschlussplatte der Rückstelleinrichtung 12 ausgebildete Führungskanäle 17 eintauchen. Neben der Führung des Permanentmagneten 14 in Verschieberichtung dient einer der Führungsstäbe 16 auch als Verbindungsmittel zwischen dem Permanentmagneten 14 und der Halteeinrichtung 10. Der zweite Führungsstab 16 kann dazu genutzt werden, den Antrieb 13 an die Rückstelleinrichtung 12 anzukoppeln.

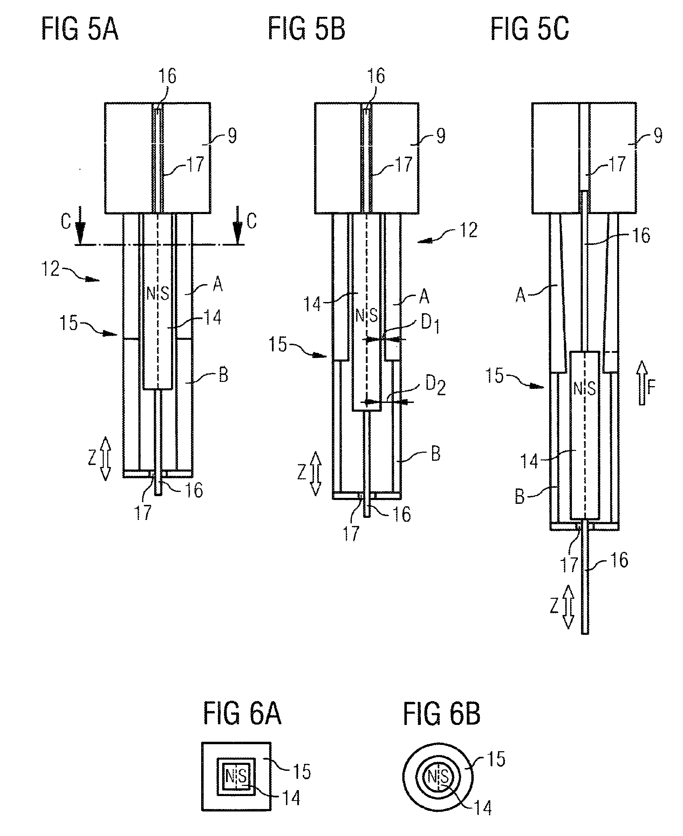

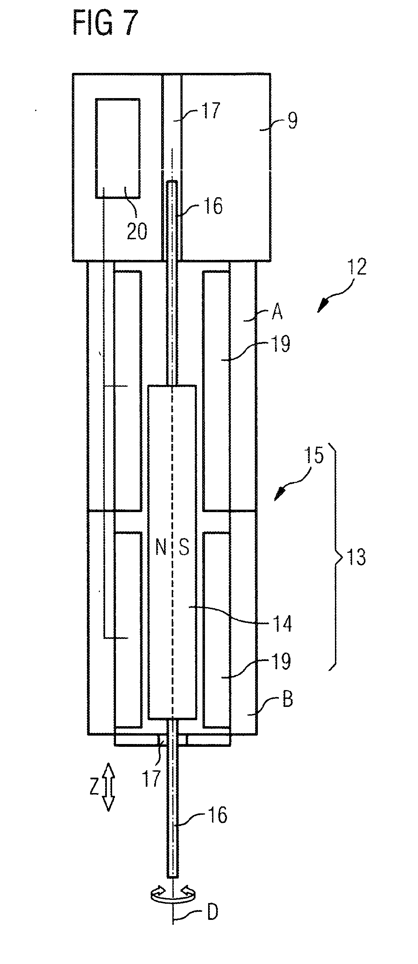

Der Antrieb 13 kann dabei als reiner Hubantrieb oder auch als Dreh-Hub-Motor ausgestaltet sein, wie sie im weiteren Verlauf mit Bezug auf Figur 7 näher erläutert werden. Im Falle eines reinen Hubantriebs sind als Querschnittsformen für die Rückstelleinrichtung 12 sowohl ein rechteckiger oder nichtrotationssymmetrischer Querschnitt als auch ein Kreisquerschnitt möglich (siehe Figuren 6A und 6B). Im Falle eines externen Dreh-Hub-Motors handelt es sich vorzugsweise um einen integrierten Dreh-Hub-Motor wie in Figur 7 dargestellt. Es ist jedoch auch möglich, einen Dreh-Hub-Motor mit zwei separaten Antrieben - einen Ersten für die Hubbewegung und einen Zweiten für die Drehbewegung - zu verwenden.

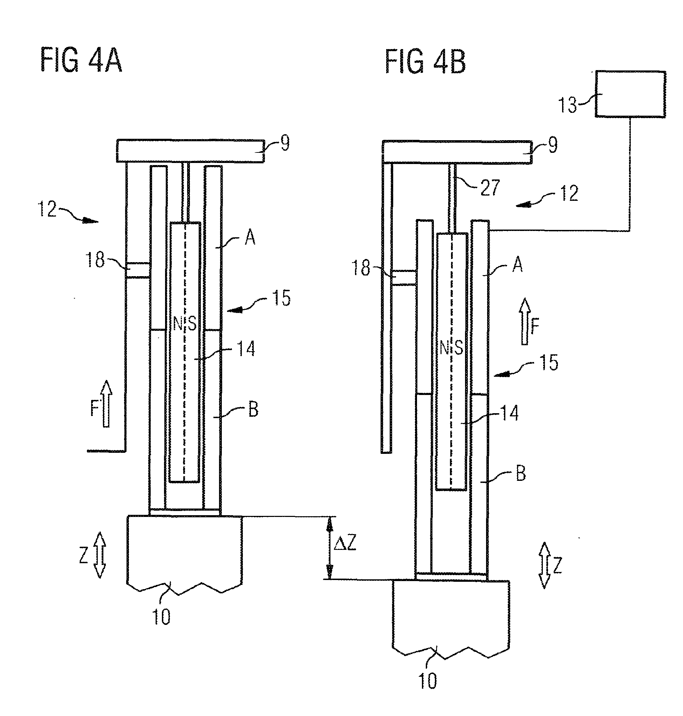

Eine zweite Ausgestaltung der Rückstelleinrichtung 12 ist in den Figuren 4A und 4B dargestellt. Bezüglich des prinzipiellen Aufbaus und des wirkenden physikalischen Effekts entspricht die zweite Ausgestaltung der in FIG 3A und FIG 3B dargestellten ersten Ausgestaltung. Jedoch unterscheidet sich die zweite Ausgestaltung von der ersten Ausgestaltung dadurch, dass hier der Permanentmagnet 14 über ein Befestigungselement 27 fest mit dem Gehäuse 9 und die Rückschlusseinrichtung 15 fest mit der Halteeinrichtung 10 verbunden sind. In diesem Fall bewegt sich daher die Rückschlusseinrichtung 15 zusammen mit der Halteeinrichtung 10 in Verschieberichtung relativ zum Permanentmagneten 14 bzw. zum Gehäuse 9. Somit stellt in dieser Ausgestaltung der Permanentmagnet 14 den stationären Teil und die Rückschlusseinrichtung 15 den mobilen Teil der Rückstelleinrichtung 12 dar. Die Rückschlusseinrichtung 15 kann zur Stabilisierung der Bewegung mit einer am Gehäuse 9 ausgebildeten Führungseinrichtung 18, wie beispielsweise einer Führungsschiene, verbunden sein.

In FIG 4A befindet sich die Halteinrichtung in der Ruheposition und in FIG 4B in der Arbeitsposition. Im Unterschied zu der in FIG 3A und FIG 3B dargestellten Ausgestaltung ist die Rückstelleinrichtung 12 hier derart ausgebildet, dass der magnetische Widerstand des Abschnitts B der Rückschlusseinrichtung 15 geringer ist als der magnetische Widerstand des Abschnitts A. Dadurch wirkt auf die Halteeinrichtung 10 die Rückstellkraft F, welche die Halteeinrichtung 10 in die in FIG 4A dargestellte Ruheposition drängt. Dies ist damit zu begründen, dass sich die Rückschlusseinrichtung 15 aufgrund des oben erläuterten physikalischen Effekts relativ zum Permanentmagneten 14 im freien Zustand derart bewegt, dass der Permanentmagnet 14 möglichst weit in den Abschnitt B mit dem geringeren magnetischen Widerstand bzw. dem größeren magnetischen Fluss eintaucht. Auch in dieser Ausgestaltung wird daher eine Sicherung der Halteeinrichtung 10 in der Ruheposition im stromlosen Zustand des Bestückkopfes 4 gewährleistet.

Anhand der Figuren 5A, 5B und 5C soll erläutert werden, wie die unterschiedlichen magnetischen Widerstände der Abschnitte A, B der Rückstelleinrichtung 12 realisierbar sind.

Eine erste Möglichkeit ist in FIG 5B dargestellt. Dort sind die Abschnitte A, B vom Permanentmagneten 14 unterschiedlich weit beabstandet. Konkret ist der Abschnitt A weniger weit vom Permanentmagneten 14 beabstandet ist als der Abschnitt B. Dadurch ist der Luftspalt D1 zwischen dem Abschnitt A und dem Permanentmagneten 14 weniger breit als der Luftspalt D2 zwischen dem Abschnitt B und dem Permanentmagneten 14. Unter der Voraussetzung, dass die beiden Abschnitte A, B aus Material mit identischem magnetischen Widerstand bestehen, ist der magnetische Widerstand aufgrund des schmäleren Luftspalts D1 in Abschnitt A kleiner als der magnetische Widersand in Abschnitt B. Dadurch, dass innerhalb der Abschnitte A, B der Abstand zum Permanentmagneten konstant ist, ist die Rückstellkraft F über die gesamte Hubstrecke Δz konstant, was insbesondere beim Bestücken mit unterschiedlich hohen Bauteilen vorteilhaft ist.

Eine zweite Möglichkeit ist in FIG 5A dargestellt. Dabei ist der Abstand zwischen den Abschnitten A, B und dem Permanentmagneten 14 gleich. Jedoch sind die Abschnitte A, B aus Materialien mit unterschiedlichem magnetischem Widerstand hergestellt. In der Ausgestaltung nach FIG 5A ist beispielsweise Abschnitt A aus Weicheisen, Abschnitt B aus Edelstahl hergestellt. Weicheisen weist gegenüber Edelstahl einen deutlich geringeren magnetischen Widerstand und einen höheren magnetischen Fluss auf. Somit ist der Permanentmagnet 14 immer bestrebt sich in Richtung des Abschnitt A zu bewegen. Auch hier ist die Rückstellkraft F über die gesamte Hubstrecke konstant.

Prinzipiell ist es aber auch möglich, beide Möglichkeiten zu verbinden, d.h. Abschnitte A, B aus Materialen mit unterschiedlichem magnetischem Widerstand zu verwenden und diese in unterschiedlichem Abstand zum Permanentmagneten 14 anzuordnen.

Eine dritte Möglichkeit zeigt FIG 5C. Dabei können die beiden Abschnitte A, B aus dem gleichen Material bestehen, jedoch weist Abschnitt B einen konstanten Abstand zum Permanentmagneten 14 auf, wohingegen im Abschnitt A der Abstand zum Permanentmagneten 14 von oben her zur Mitte der Rückschlusseinrichtung 15 hin linear abnimmt. Dies führt dazu, dass auf den Permanentmagneten in der unteren Stellung (gezeichnet) eine hohe Rückstellkraft F wirkt, die bei Verschiebung des Permanentmagneten 14 zum oberen Ende der Hubstrecke Δz hin abnimmt. Dies ist dadurch zu erklären, dass im Abschnitt A mit zunehmendem Abstand der magnetische Fluss abnimmt und dementsprechend der magnetische Widerstand zunimmt.

In den Figuren 6A und 6B sind zwei mögliche Querschnittsformen der Rückstelleinrichtung 12 entlang der Querschnittslinie C-C in FIG 5A dargestellt. In der Ausgestaltung nach FIG 6A weist die Rückschlusseinrichtung 15 eine Form eins Hohlquaders auf, welcher den quaderförmig ausgebildeten Permanentmagneten 14 einschließt. Bei dieser Ausgestaltung ist lediglich eine Verschiebung des Permanentmagneten 14 relativ zur Rückschlusseinrichtung 15 in Verschieberichtung möglich. Es ist auch möglich, für die Gestaltung des Permanentmagneten jeden anderen geraden Körper, beispielsweise ein Prisma, zu verwenden, wobei die Rückschlusseinrichtung dann entsprechend dazu als Hohlprisma auszugestalten wäre.

Bei dem in FIG 6B dargestellten Ausführungsbeispiel ist die Rückschlusseinrichtung 15 als Hohlzylinder und der Permanentmagnet 14 als lang gestrecktem Zylinder ausgebildet. Die Rückschlusseinrichtung 15 umgibt den Permanentmagneten 14 dabei radial. Bei dieser Ausgestaltung ist sowohl eine lineare Verschiebung des Permanentmagneten 14 als auch eine Rotation des Permanentmagneten 14 relativ zur Rückschlusseinrichtung 15 möglich. Dadurch kann beispielsweise auf die Halteeinrichtung 10 sowohl ein Drehmoment als auch eine lineare Verschiebekraft ausgeübt werden. Durch die Rotation wäre es beispielsweise möglich, ein von der Halteeinrichtung 10 gehaltenes Bauteil 11 in eine bestimmte Winkelposition zu drehen.

In FIG 7 ist eine weitere Ausgestaltung des Bestückkopfes 4 schematisch dargestellt. Zunächst wird angenommen, dass es sich bei dem Antrieb 13 um einen kombinierten Dreh-Hub-Motor mit integrierter Rückstelleinrichtung handelt. Demnach ist der Antrieb 13 für die Halteeinrichtung 10 als elektromagnetischer Antrieb 13 ausgestaltet. Der Antrieb 13 umfasst ein mit dem Gehäuse 9 fest verbundenes Stationärteil, welches zwei in Verschieberichtung hintereinander angeordnete Spulenpakete 19 mit entsprechenden Spulenwicklungen aufweist. Vorteilhafterweise weist dabei die Wicklung eines jeden Spulenpakets sowohl ausreichend Windungsanteile in Längsrichtung (parallel zur Drehachse) als auch orthogonal dazu in Umfangsrichtung auf, um damit sowohl die Drehbewegung als auch die Hubbewegung adäquat realisieren zu können.

Im Ausführungsbeispiel wird das Stationärteil durch die Rückschlusseinrichtung 15 gebildet, an deren dem Permanentmagneten 14 zugewandten Innenseite die Spulenpakete 19 angeordnet sind. Dem Bestückkopf 4 ist ferner eine Antriebssteuerung 20 zum Steuern des Antriebs 13 zugeordnet, welche mit den Spulenpaketen 19 elektrisch gekoppelt ist. Die Antriebssteuerung 20 kann dabei sowohl am Bestückkopf 4 selbst als auch am Trägerarm 5 oder an einem Chassis (nicht dargestellt) des Bestückautomaten 1 angebracht sein. Dadurch kann die verfahrbare Masse reduziert werden, was sich insbesondere bei hohen Beschleunigungen vorteilhaft auswirkt. Die Spulenpakete 19 werden von einer externen Stromquelle (nicht dargestellt) über die Antriebssteuerung 20 mit Strom versorgt.

Diese Ausgestaltung des Bestückkopfes zeichnet sich insbesondere dadurch aus, dass der Permanentmagnet 14 der Rückstelleinrichtung 12 auch gleichzeitig das Mobilteil des Antriebs 13 darstellt. Der Permanentmagnet 14 wirkt dabei mit den bestromten Spulenpaketen 19 derart zusammen, dass sich bei entsprechender Ansteuerung durch die Antriebssteuerung 20 die Halteeinrichtung 10 in der Verschieberichtung bewegt. Hierzu ist jedoch notwendig, dass der Permanentmagnet 14 mit zumindest einem der Spulenpakete 19 nur teilweise überlappt. Bei dieser Ausgestaltung sind also Elemente der Rückstelleinrichtung 12 und des Antriebs 13 zusammengefasst. Dadurch, dass der Permanentmagnet 14 sowohl Bestandteil der Rückstelleinrichtung 12 als auch des Antriebs 13 ist, können Bauelemente eingespart und der Bestückkopf 1 kostengünstiger und kompakter konstruiert werden. Gleichzeitig stellt die Rückschlusseinrichtung 15 auch Teil des Stationärteiles des Antriebs 13 dar.

Obwohl in den Ausgestaltungen gemäß der Figuren 5A, 5B und 7 die Halteeinrichtung 10 mit dem Permanentmagneten 14 gekoppelt ist und dadurch der Permanentmagnet 14 sich zusammen mit der Halteeinrichtung 10 relativ zur Rückschlusseinrichtung 15 bzw. zum Gehäuse 9 bewegt, ist es jedoch auch möglich, dass die Halteeinrichtung 10 mit der Rückschlusseinrichtung 15 gekoppelt ist und sich zusammen mit dieser in Verschieberichtung relativ zum am Gehäuse 9 befestigten Permanentmagneten 14 bewegt, wie es im Ausführungsbeispiel gemäß der Figuren 4A und 4B dargestellt ist.

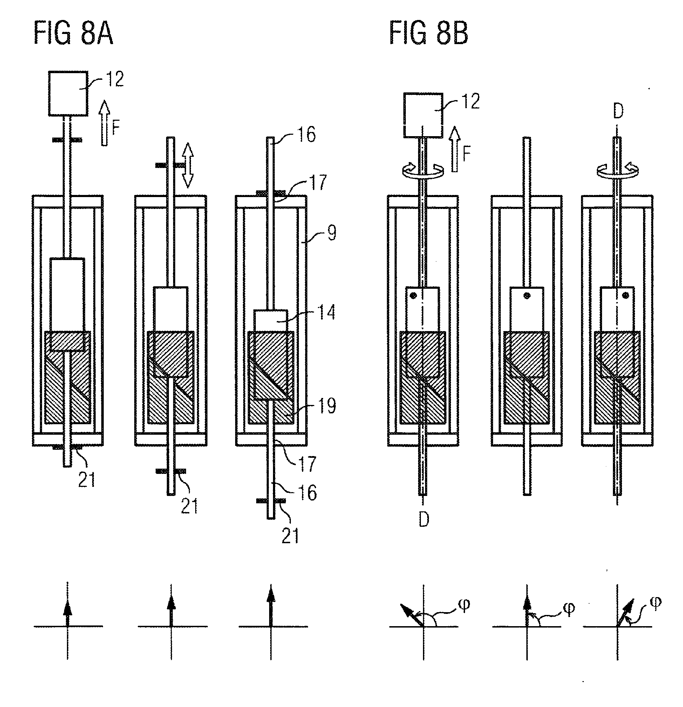

Wird als Antrieb ein kombinierter Dreh-Hub-Motor mit integrierter Rückstelleinrichtung 12 verwendet, so ist vorzugsweise der Permanentmagnet 14 bzw. das Mobilteil als Rotor ausgebildet und relativ zum Stationärteil um die zur Verschieberichtung parallele Drehachse D drehbar gelagert. Dabei bietet sich die Ausgestaltung gemäß der FIG 6B an, bei der der Permanentmagnet 14 zylinderförmig und die Rückschlusseinrichtung 15 als Hohlzylinder ausgebildet ist. Die Spulenpakete 19 des Stationärteiles, ebenfalls in Form zylinderförmiger Hohlkörper, sind jeweils mehrphasig ausgebildet und die Antriebssteuerung 20 steuert den Strom durch die Spulenpakete 19 hinsichtlich Amplitude und Phasenwinkel derart, dass das durch den Strom verursachte Magnetfeld des Stationärteiles mit dem Magnetfeld des Permanentmagneten 14 wechselwirkt und sowohl eine lineare Verschiebung als auch eine Rotation des Rotors bewirkt. Eine detaillierte Beschreibung dieses Wirkprinzips findet sich in den Erläuterungen zu den Figuren 8A und 8B. Durch die Vorsehung dieses Dreh-Hub-Motors ergibt sich eine noch kompaktere Bauweise, da auf einen separaten Drehantrieb verzichtet werden kann.

Obwohl in FIG 7 ein kombinierter Dreh-Hub-Motor mit integrierter Rückstelleinrichtung 12 dargestellt ist, ist es ist jedoch auch möglich, die Rückstelleinrichtung 12 und den Dreh-Hub-Motor getrennt voneinander aufzubauen, wie schematisch bereits in Figur 3 dargestellt. Bei einem derartigen Dreh-Hub-Motor ohne integrierter Rückstelleinrichtung 12 sind die Abschnitte A, B der Rückstelleinrichtung 12 ersetzt durch ein entsprechendes Motorgehäuse, welches beispielsweise aus zwei lösbar miteinander verbundenen Gehäuseteilen, beispielsweise aus zwei zylinderförmigen Hülsen 26, besteht. Ebenso können die beiden Abschnitte A, B der Rückstelleinrichtung 12 in einem einteiligen Motorgehäuse, beispielsweise als Drehteil mit einer entsprechenden Stufe, ausgebildet sein. Das Motorgehäuse des Dreh-Hub-Antriebs dient dann lediglich noch als magnetischer Rückschluss für die Spulenpakete 19, mit einem konstanten magnetischen Widerstand.

Ebenso ist es möglich, mittels des in FIG 7 dargestellten Ausführungsbeispiels einen reinen Hubantrieb mit integrieter Rückstellung zu realisieren, falls eine zusätzliche Drehbewegung nicht erforderlich sein sollte. In diesem Fall ist der Antrieb derart ausgestaltet, dass lediglich eine lineare Verschiebung in der Verschieberichtung z führt. Als mögliche Querschnittsformen für einen derartigen Hubantrieb können beispielsweise die in den Figuren 6A und 6B dargestellten Alternativen verwendet werden.

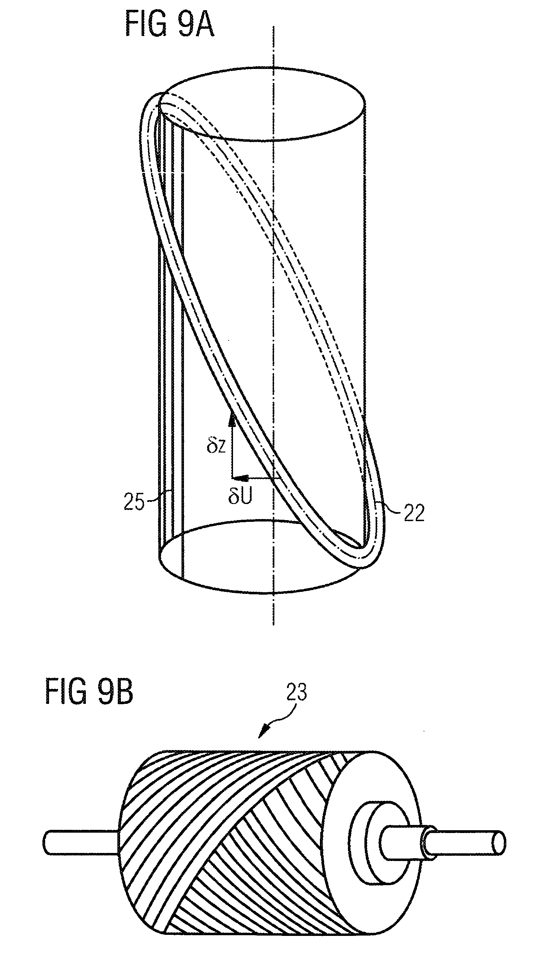

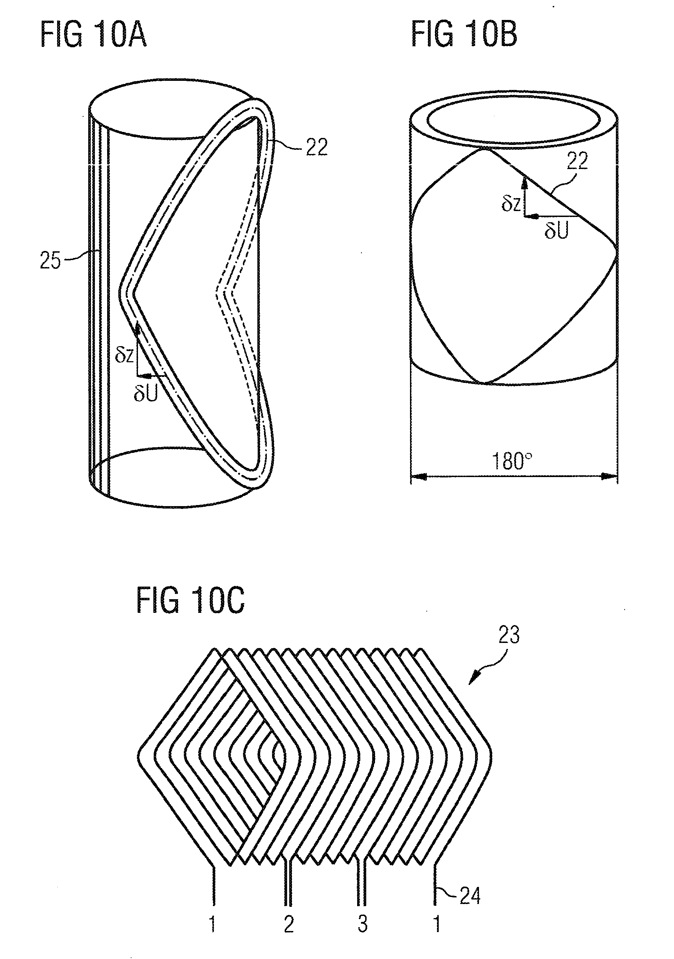

In den Figuren 8A und 8B ist das Wirkprinzip des Dreh-Hub-Motors schematisch dargestellt. Da zur Beschreibung dieses Wirkprinzips die magnetische Rückstellung nicht erforderlich ist, wird in den Figuren 8A und 8B auf eine detaillierte Darstellung verzichtet. Die Rückstelleinrichtung 12 ist lediglich abstrahiert als Blackbox angedeutet. Neben der oben detailliert ausgeführten magnetischen Rückstellung kann es sich dabei jedoch auch um eine Feder oder eine pneumatische Rückstellung handeln. In beiden Figuren ist im oberen Teil die Stellung des Permanentmagneten 14 zum zylindrischen Spulenpaket 19 des Dreh-Hub-Motors dargestellt. FIG 8A zeigt dabei die Lage des Permanentmagneten 14 relativ zum Gehäuse 9 in Richtung der Drehachse D. Die in Figur 8B dargestellte Drehlage des Permanentmagneten 14 relativ zum Gehäuse 9 wird dabei durch die punktförmige Markierung am oberen Ende des Permanentmagneten 14 verdeutlicht. Im unteren Teil der Darstellungen der Figuren 8A und 8B ist der jeweils dazugehörige Stromvektor des Spulenstroms als Zeigerdiagramm angegeben. Die Diagramme sollen verdeutlichen, wie sich allein durch die Änderung der Amplitude sowie des Phasenwinkels ϕ des Stroms durch das Spulenpaket 19 sowohl eine rotatorische Bewegung als auch eine translatorische Bewegung des als Rotor ausgebildeten Permanentmagneten 14 innerhalb des Gehäuses realisieren lässt. Dabei ist jedoch notwendig, dass die Windungen des Spulenpakets 19 sowohl Richtungsanteile in Orientierungsrichtung der Drehachse D als auch senkrecht dazu in Richtung des Umfangs des zylindrischen Spulenpakets 19 aufweisen. Als mögliche Ausgestaltungsformen der Windungsgeometrie wären eine Schrägwicklung oder auch eine Rhombuswicklung zu nennen (siehe Figuren 9A, 9B bzw. 10A, 10B, 10C).

FIG 8A zeigt, wie sich der Permanentmagnet 14 bei Variation der Amplitude des Spulenstroms verhält. Der Spulenstrom wird auf einen bestimmten Amplitudenwert eingestellt, so dass die daraus resultierende Axialkraft in z-Richtung betragsmäßig der entgegengesetzt wirkenden Rückstellkraft F entspricht. Wird die Amplitude nun erhöht, so übersteigt die daraus resultierende Axialkraft die entgegengesetzt wirkende Rückstellkraft, der Permanentmagnet 14 des Rotors wird in das Spulenpaket 19 hineingezogen. Hierfür sind diejenigen Richtungsanteile des Spulenstroms verantwortlich, die in Umfangsrichtung, senkrecht zur Drehachse D, verlaufen. Wird die Amplitude des Spulenstroms hingegen reduziert, so wandert der Permanentmagnet 14 aufgrund der von der Rückstelleinrichtung 12 aufgebrachten Rückstellkraft F wieder aus der Spule 19 heraus. Befindet sich die Spule im unbestromten Zustand, so wird der Permanentmagnet 14 durch die Rückstellkraft, welche in negativer z-Richtung wirkt, in einer Ruheposition gehalten. Insgesamt ist jedoch zu beachten, dass der Permanentmagnet 14 niemals vollständig in das Spulenpaket eintaucht bzw. vollständig aus dem Spulenpaket heraustritt, sondern über die gesamte Hubstrecke mit zumindest einem Spulenpaket nur teilweise überlappt. Falls der Permanentmagnet über seine gesamte Länge gleichzeitig mit allen Spulen vollständig überlappen würde, würden sich die Axialkräfte vollständig aufheben, so dass die Variation des Spulenstroms keinerlei Auswirkung mehr auf eine translatorische Lageveränderung in Richtung der Drehachse D hätte. Um dies zu gewährleisten weist der Antrieb 13 Vorteilhafterweise Anschläge 21 an den Führungsstäben 16 oder am Gehäuse auf, welche die Hubbewegung des Permanentmagneten 14 entsprechend begrenzen. Vorzugsweise beträgt der Anteil, mit dem der Permanentmagnet 14 in das Spulenpaket 19 eintaucht, 25 bis 75 Prozent der Gesamtlänge des Spulenpakets 19.

Die Darstellungen der FIG 8B verdeutlichen, wie sich der Permanentmagnet 14 bei Variation der Stromrichtung bzw. des Phasenwinkels ϕ des Spulenstroms verhält: Wird der Phasenwinkel ϕ vergrößert (linke Darstellung in FIG 8B), so hat dies eine rotatorische Bewegung des Permanentmagneten nach links zur Folge, abzulesen an der punktförmigen Markierung am oberen Rand des Permanentmagneten 14. Wird jedoch der Phasenwinkel ϕ verkleinert (rechte Darstellung in FIG 8B), so hat dies eine rotatorische Bewegung des Permanentmagneten 14 nach rechts zur Folge (vgl. Stellung der Markierung in der rechten Darstellung in FIG 8B). Verantwortlich für die Drehbewegung sind diejenigen Richtungsanteile des Spulenstroms, die parallel zur Drehachse D verlaufen.

In den Figuren 9A und 9B sind schematische Darstellungen einer Schrägwicklung gezeigt. Dabei handelt es sich um eine hohlzylindrische Luftspaltwicklung mit schräg zu den Mantellinien 25 verlaufenden Windungen 22, wobei die Wicklung Vorteilhafterweise aus einem einzigen Draht zickzackförmig am Umfang hin- und herlaufend und sich Windung neben Windung legend zwei- oder mehrlagig gewickelt ist. Die Schrägwicklung zeichnet sich dadurch aus, dass die Steigung ∂z/∂U über die einzelnen Windungsgänge 22 entlang des Umfangs U des zylinderförmigen Hohlkörpers erfolgt. Unter Windung ist dabei ein Umlauf oder eine Schlaufe einer elektrischen Spule oder Wicklung zu verstehen. Vorteilhafterweise ist dabei das Spulenpaket 19 nicht aus einer Mehrzahl von Einzelwicklungen aufgebaut, sondern besteht aus nur einer, durchgängigen Wicklung 23, welche vorzugsweise aus einem Leiter gewickelt ist.

FIG 9A zeigt eine einzige Windung 22 einer solchen Schrägwicklung. Dabei wird sichtbar, dass innerhalb einer derartigen Windung 22 durch die schräge Anordnung der Spulenstrom sowohl Anteile in axialer Richtung als auch in Umfangsrichtung aufweist. Zur Herstellung einer Wicklung 23 werden mehrere derartiger Windungen 22 nebeneinander gelegt, wobei die Steigung ∂z/∂U über die einzelnen Windungsgänge entlang des Umfangs U des zylinderförmigen Hohlkörpers erfolgt. In FIG 9B ist eine derartige vollständige Wicklung 23 schematisch dargestellt. Die für einen Elektromotor notwendigen, einzelnen Phasen können durch eigene Wicklungen oder auch durch Anzapfungen 24 an ein und derselben Wicklung realisiert werden. Wird die Spule nun bestromt, so ergeben sich durch die Wechselwirkung des Permanentmagneten 14 mit dem Dreh-Magnetfeld der Spule sowohl Kraftkomponenten in Umfangsrichtung (durch die axialen Windungsanteile) als auch Kraftkomponenten in Axialrichtung (durch die Windungsanteile in Umfangsrichtung), zumindest so lange, wie der Permanentmagnet 14 des Rotors nicht vollständig in die Spulenwicklung 23 eintaucht. Vorteilhafterweise taucht der Rotor mit einer Länge von 25 bis 75 Prozent der Spulenlänge in die Wicklung ein. Aus dieser Forderung ergibt sich letztendlich der maximale realisierbare Hub des Dreh-Hub-Motors.

Die Figuren 10A bis 10C zeigen schematische Darstellungen einer Rhombuswicklung. Die Figuren 10A sowie 10B zeigen eine einzige Windung 22 einer derartigen Rhombuswicklung. Dabei wird sichtbar, dass innerhalb einer derartigen Windung 22 durch die schräge Anordnung der Spulenstrom sowohl Anteile in axialer Richtung als auch in Umfangsrichtung aufweist. Um die maximal mögliche Wirkungsdichte zu erreichen, werden die Kupferleiter rhombenförmig angeordnet. Zur Herstellung einer solchen Wicklung wird der Draht Windung für Windung auf einen Vierkant gewickelt und anschließend zu einem flachen Band gedrückt, wie in Figur 10C dargestellt. Dadurch rücken die Drähte an die beiden Bandkanten bis zur gegenseitigen Berührung. Anschließend wird das Band zu einem Zylinder gerollt und verklebt, wobei die Steigung ∂z/∂U über die einzelnen Windungsgänge 22 entlang des Umfangs U des zylinderförmigen Hohlkörpers erfolgt. Die in Figur 10C dargestellten Wicklungsanzapfungen 24 werden mit den zugehörigen Anschlüssen des Servoverstärkers (nicht dargestellt) verbunden. Das Wirkprinzip der bestromten Spule mit Rautenwicklung ähnelt dem der Schrägwicklung: Durch die Wechselwirkung des Permanentmagneten 14 mit dem Dreh-Magnetfeld der Spulenwicklung 23 entstehen sowohl Kraftkomponenten in Umfangsrichtung (durch die axialen Windungsanteile) als auch Kraftkomponenten in Axialrichtung (durch die Windungsanteile in Umfangsrichtung). Auch hier bestimmt die Forderung, dass der Permanentmagnet 14 nicht vollständig in die Spulenwicklung eintaucht, sondern optimaler Weise mit einem Anteil von 25 bis 75 Prozent der Spulenlänge, den maximal realisierbaren Hub des Dreh-Hub-Motors.

### Bezugszeichenliste:

1 Bestückautomat
2 Substrat
3 Transportstrecke
4 Bestückkopf
5 Positionierarm
6 Träger
7 Steuereinrichtung
8 Zuführeinrichtung
9 Gehäuse
10 Halteeinrichtung
11 Bauteile
12 Rückstelleinrichtung
13 Dreh-Hub-Motor / Hubantrieb
14 Permanentmagnet
15 Rückschlusseinrichtung / magnetischer Rückschluss
16 Führungsstab
17 Führungskanal
18 Führungseinrichtung
19 Spulenpakete
20 Antriebssteuerung
21 Anschläge
22 Windung
23 Spulenwicklung
24 Phasen-Anzapfung
25 Mantellinie
26 zylindrische Hülse / Hohlzylinder
27 Befestigungselement

## Patentansprüche

1. Elektrischer Dreh-Hub-Motor (13)
- mit einem Primärteil, welches mindestens zwei mehrphasige Spulenpakete (19) in Form eines zylinderförmigen Hohlkörpers aufweist,
- einem Sekundärteil mit einem Permanentmagneten (14), welcher zumindest abschnittsweise innerhalb des zylinderförmigen Hohlkörpers der zumindest zwei Spulenpakete (19) angeordnet ist; relativ zum Primärteil um eine Drehachse drehbar und in einer Verschieberichtung um eine Hubstrecke (Δz) verschiebbar gelagert ist und quer zur Drehachse magnetisiert ist,
- einer mit dem Primärteil gekoppelten Steuereinrichtung (20), mittels der der Strom durch die Spulenpakete (19) hinsichtlich Amplitude und Phasenrichtung derart steuerbar ist, dass das durch den Strom verursachte Magnetfeld des Primärteils mit dem Magnetfeld des Permanentmagneten (14) wechselwirkt und sowohl eine Verschiebung als auch eine Rotation des Sekundärteils relativ zum Primärteil bewirkt,
- wobei die Spulenpakete (19) eine Schrägwicklung aufweisen, deren Windungen (22) schräg zu den Mantellinien (25) des zylinderförmigen Hohlkörpers verlaufen
- oder wobei die Spulenpakete (19) eine Spulenwicklung (23) mit rautenförmigen Windungen (22) aufweisen,
- wobei die Verschiebung des Sekundärteils relativ zum Primärteil über die Hubstrecke (Δz) in ihren beiden Endstellungen durch Anschläge (21) derart begrenzt ist, dass der Permanentmagnet (14) bei einer Verschiebung zwischen den beiden Endstellungen in jeder Position zumindest eines der Spulenpakete (19) nur teilweise überlappt.
**gekennzeichnet durch** eine Rückschlusseinrichtung (15), welche in Verschieberichtung mindestens zwei Abschnitte (A, B) mit unterschiedlichem magnetischem Widerstand aufweist und derart mit dem Permanentmagneten (14) zusammenwirkt, dass sich ein magnetischer Rückschluss bildet, wobei die Rückschlusseinrichtung (15) derart ausgebildet ist, dass der Permanentmagnet (14) beim Verschieben über die Hubstrecke (Δz) gleichzeitig mit zumindest zwei Abschnitten (A, B) der Rückschlusseinrichtung (15) überlappt.

2. Dreh-Hub-Motor (13) nach Anspruch 1, wobei die Abschnitte (A, B) Materialien mit unterschiedlichem magnetischem Widerstand aufweisen.

3. Dreh-Hub-Motor (13) nach Anspruch 1, wobei die Abschnitte (A, B) von dem Permanentmagneten (14) unterschiedlich weit beabstandet sind.

4. Dreh-Hub-Motor (13) nach einem der Ansprüche 1 bis 3, wobei die Abschnitte (A, B) derart ausgebildet sind, dass auf den Permanentmagneten (14) beim Verschieben über die Hubstrecke (Δz) eine konstante Kraft wirkt, welche parallel zur Verschieberichtung gerichtet ist.

5. Dreh-Hub-Motor (13) nach einem der Ansprüche 1 bis 3, wobei die Abschnitte (A, B) derart ausgebildet sind, dass auf den Permanentmagneten (14) beim Verschieben über die Hubstrecke (Δz) eine Kraft wirkt, welche über die Hubstrecke variiert.

6. Dreh-Hub-Motor (13) nach einem der Ansprüche 1 bis 5, wobei die Rückschlusseinrichtung (15) aus zwei zylinderförmigen Hülsen (26) besteht, welche lösbar miteinander verbindbar sind und jeweils einen der Abschnitte (A, B) aufweisen.

7. Dreh-Hub-Motor (13) nach einem der Ansprüche 1 bis 6, wobei das Primärteil mehrere Spulenpakete (19) aufweist, welche in Verschieberichtung nebeneinander angeordnet sind.

8. Bestückkopf (4) zum Bestücken von Substraten (2) mit elektrischen Bauelementen (11), mit einer Halteeinrichtung (10) zur Aufnahme der elektrischen Bauelemente (11), sowie einem Dreh-Hub-Motor (13) nach einem der Ansprüche 1 bis 7, wobei das Primärteil fest mit einem Gehäuseteil (9) des Bestückkopfs (4) verbunden ist und das Sekundärteil mit der Halteeinrichtung (10) gekoppelt ist.

## Claims

1. Electric rotation-lift motor (13)
- with a primary part having at least two multi-phase coil packages (19) in the form of a cylindrical hollow body,
- a secondary part heaving a permanent magnet (14), arranged at least sectionally within the cylindrical hollow body of the at least two coil packages (19), which is mounted turnably around a rotation axis relative to the primary part as well as moveably in a shift direction by a stroke distance (Δz) and which is magnetized transverse to the rotation axis,
- a control device (20) coupled with the primary part, by which the current flowing through the coil packages (19) can be controlled with regard to amplitude and phase direction such that the magnetic field of the primary part caused by the current interacts with the magnetic field of the permanent magnet (14) and causes both a shift and a rotation of the secondary part relative to the primary part,
- wherein the coil packages (19) have a skew winding, whose windings (22) are located diagonally to the surface lines (25) of the cylindrical hollow body,
- or wherein the coil packages (19) have a coil winding (23) with diamond-shaped windings (22),
- wherein the shift of the secondary part relative to the primary part along the stroke distance (Az) is bounded in its two end positions by stops (21) such that during a shift between the two end positions the permanent magnet (14) overlaps in each position at least one of the coil packages (19) only partly,
**characterized by** an inference unit (15), which in the shift direction has at least two sections (A, B) with different magnetic reluctance and interacts with the permanent magnet (14) such that a magnetic inference is formed, wherein the inference device (15) is constructed such that the permanent magnet (14) during the shift by the stroke distance (Δz) overlaps simultaneously with at least two sections (A,B) of the inference device (15).

2. Rotation-lift motor (13) according to claim 1, wherein the sections (A, B) have materials of different magnetic reluctance.

3. Rotation-lift motor (13) according to claim 1, wherein the sections (A, B) are differently spaced from the permanent magnet (14).

4. Rotation-lift motor (13) according to one of claims 1 to 3, wherein the sections (A, B) are formed such that during the shift by the stroke distance (Δz) a constant force acts on the permanent magnet (14), which is directed in parallel to the shift direction.

5. Rotation-lift motor (13) according to one of claims 1 to 3, wherein the sections (A, B) are formed such that during the shift by the stroke distance (Δz) a force acts on the permanent magnet (14), which varies along the stroke distance.

6. Rotation-lift motor (13) according to one of claims 1 to 5, wherein the inference device (15) consists of two cylindrical sleeves (26), which can be connected releasably with each other and each comprising one of the sections (A, B).

7. Rotation-lift motor (13) according to one of claims 1 to 6, wherein the primary part has several coil packages (19), which are disposed adjacent to one another in shift direction.

8. Placement head (4) for mounting electrical components (11) onto substrates (2), with a holding device (10) for receiving the electrical components (11) as well as a rotation-lift motor (13) according to one of claims 1 to 7, wherein the primary part is firmly connected with a housing part (9) of the mounting head (4) and the secondary part is coupled with the holding device (10).

## Revendications

1. Moteur électrique (13) de rotation et de levage, comprenant
- une partie primaire, pourvue d'au moins deux groupes de bobines multiphasées (19) revêtant la forme d'un corps creux cylindrique,
- une partie secondaire dotée d'un aimant permanent (14) qui est logé, au moins par zones, à l'intérieur dudit corps creux cylindrique des groupes de bobines (19) au nombre minimal de deux, peut tourner autour d'un axe de rotation vis-à-vis de la partie primaire, est montré avec mobilité suivant une course de levage (Δz) dans une direction de déplacement, et est magnétisé transversalement par rapport audit axe de rotation,
- un dispositif de commande (20) couplé à la partie primaire, et au moyen duquel peuvent être commandées l'amplitude et la direction de phase du courant circulant par lesdits groupes de bobines (19), de façon telle que le champ magnétique de ladite partie primaire, engendré par le courant, soit en interaction avec le champ magnétique de l'aimant permanent (14) et provoque tant un déplacement, qu'une rotation de la partie secondaire vis-à-vis de ladite partie primaire,
- sachant que les groupes de bobines (19) présentent un enroulement incliné dont les spires (22) s'étendent à l'oblique par rapport aux génératrices (25) du corps creux cylindrique,
- ou sachant que lesdits groupes de bobines (19) comportent un enroulement bobiné (23) à spires (22) rhombiformes,
- le déplacement de la partie secondaire vis-à-vis de la partie primaire, suivant la course de levage (Δz), étant limité par des butées (21) dans ses deux positions extrêmes de telle sorte que, lors d'un déplacement entre les deux positions extrêmes, l'aimant permanent (14) ne chevauche que partiellement au moins l'un desdits groupes de bobines (19) à chaque emplacement,
**caractérisé par** un dispositif de rétroaction (15) qui comprend, dans la direction du déplacement, au moins deux régions (A, B) à résistances magnétiques différentes, et qui coopère avec l'aimant permanent (14) de manière à former une culasse magnétique, ledit dispositif de rétroaction (15) étant réalisé de façon telle que, lors du déplacement suivant la course de levage (Δz), ledit aimant permanent (14) se trouve simultanément en chevauchement avec au moins deux régions (A, B) dudit dispositif de rétroaction (15).

2. Moteur (13) de rotation et de levage selon la revendication 1, dans lequel les régions (A, B) présentent des matériaux à résistances magnétiques différentes.

3. Moteur (13) de rotation et de levage selon la revendication 1, dans lequel les régions (A, B) se trouvent à des distances différentes de l'aimant permanent (14).

4. Moteur (13) de rotation et de levage selon l'une des revendications 1 à 3, dans lequel les régions (A, B) sont réalisées de telle sorte que, lors du déplacement suivant la course de levage (Δz), l'aimant permanent (14) soit soumis à l'action d'une force constante orientée parallèlement à la direction du déplacement.

5. Moteur (13) de rotation et de levage selon l'une des revendications 1 à 3, dans lequel les régions (A, B) sont réalisées de telle sorte que, lors du déplacement suivant la course de levage (Δz), l'aimant permanent (14) soit soumis à l'action d'une force qui varie sur ladite course de levage.

6. Moteur (13) de rotation et de levage selon l'une des revendications 1 à 5, dans lequel le dispositif de rétroaction (15) est constitué de deux douilles cylindriques (26) pouvant être reliées l'une à l'autre de manière dissociable, et respectivement munies de l'une des régions (A, B).

7. Moteur (13) de rotation et de levage selon l'une des revendications 1 à 6, dans lequel la partie primaire comprend plusieurs groupes de bobines (19) agencés en juxtaposition dans la direction du déplacement.

8. Tête de garnissage (4) conçue pour garnir des substrats (2) en composants électriques (11), comprenant un dispositif de retenue (10) destiné à recevoir lesdits composants électriques (11), ainsi qu'un moteur (13) de rotation et de levage conforme à l'une des revendications 1 à 7, la partie primaire étant reliée rigidement à une partie de carter (9) de ladite tête de garnissage (4), et la partie secondaire étant couplée audit dispositif de retenue (10).
